# EUROPÄISCHE PATENTANMELDUNG

(11) **EP 4 269 810 A1**
(43) Veröffentlichungstag der Anmeldung: **01.11.2023**
(21) Anmeldenummer: 23169672.5
(22) Anmeldetag: 25.04.2023
(51) Int. Cl.: F15B 7/00, F15B 21/14, F15B 11/02, F15B 11/024, B23K 11/00, B25B 5/00

(54) **VERFAHREN ZUM BETREIBEN EINES HYDRAULISCHEN SYSTEMS MIT MINDESTENS EINEM HYDRAULISCH BETÄTIGBAREN STELLER**

(30) Priorität: 29.04.2022 DE 102022204211
(71) Anmelder: Robert Bosch GmbH, 70442 Stuttgart (DE)
(72) Erfinder: Goldbach, Michael, 97816 Lohr A. Main (DE); Herzog, Ingo, 97295 Waldbrunn (DE); Knoell, Reiner, 97775 Burgsinn (DE)

(57) **Zusammenfassung**

Die Erfindung betrifft ein Verfahren zum Betreiben eines hydraulischen Systems (1) mit mindestens einem hydraulisch betätigbaren Steller (2), umfassend zumindest folgende Schritte:
a) Erzeugen von kinetischer Energie in zumindest einem Teil des Systems (1),
b) Speichern zumindest eines Teils der erzeugten kinetischen Energie in zumindest einem Teil des Systems (1),
c) Bereitstellen von Hydraulikdruck in zumindest einem Teil des Systems (1) unter Verwendung zumindest eines Teils der gespeicherten Energie.

## Beschreibung

Die Erfindung betrifft ein Verfahren zum Betreiben eines hydraulischen Systems mit mindestens einem hydraulisch betätigbaren Steller. Zudem wird ein hydraulisches System zur Durchführung des Verfahrens angegeben. Das Verfahren kann beispielsweise zum Halten einer Einspannung von beispielsweise mindestens einem Werkstück und/oder zum Zustellen eines Werkzeugs, wie etwa einer Schweißzange verwendet werden. Als Steller kann zum Beispiel ein Zylinder oder ein rotatorischer Antrieb verwendet werden, beispielsweise zum Einspannen von Werkstücken oder Zustellen eines Werkzeugs, wie etwa eine Schweißzange.

Bekannte hydraulische Direktantriebe weisen in der Regel einen Elektromotor, eine hydraulische Pumpe, Ventile zur Verschaltung und Absicherung des Systems sowie einen Zylinder auf. Bei Differentialzylindern wird in der Regel ein Ausgleichsbehälter eingesetzt. Bei einfachen Systemen ist die hydraulische Pumpe eine Konstantpumpe. Somit ist das vom Elektromotor erzeugte Moment proportional zum Druckaufbau im Zylinder. Die Energie, die der Elektromotor in das System gibt, steht, abzüglich der Reibung und Wirkungsgrad der Pumpe, für den Druckaufbau zur Verfügung.

Es ist eine Aufgabe der Erfindung hydraulische Systeme mit mindestens einem hydraulisch betätigbaren Steller, zum Beispiel in der Art eines Zylinders oder rotativen Antriebs kompakter bauen und/oder energieeffizienter betreiben zu können.

Diese Aufgaben werden gelöst durch die Merkmale der unabhängigen Patentansprüche. Weitere vorteilhafte Ausgestaltungen der hier vorgeschlagenen Lösung sind in den abhängigen Patentansprüchen angegeben. Es ist darauf hinzuweisen, dass die in den abhängigen Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zum Betreiben eines hydraulischen Systems mit mindestens einem hydraulisch betätigbaren Steller, wie beispielsweise einem hydraulisch betätigbaren Zylinder oder einem hydraulisch betätigbaren rotativen Antrieb bei, umfassend zumindest folgende Schritte:
a) Erzeugen von kinetischer Energie in zumindest einem Teil des Systems,
b) Speichern zumindest eines Teils der erzeugten kinetischen Energie in zumindest einem Teil des Systems,
c) Bereitstellen von Hydraulikdruck in zumindest einem Teil des Systems unter Verwendung zumindest eines Teils der gespeicherten (kinetischen) Energie.

Die Schritte a), b) und c) können zur Durchführung des Verfahrens beispielsweise zumindest einmal und/oder wiederholt in der angegebenen Reihenfolge durchgeführt werden. Weiterhin können die Schritte a), b) und c), insbesondere die Schritte a) und b) oder b) und c) zumindest teilweise parallel oder gleichzeitig durchgeführt werden. Das Verfahren kann zum Betreiben eines hier auch beschriebenen hydraulischen Systems durchgeführt werden.

Das Verfahren dient insbesondere zum Aufbringen eines Drucks im Steller (z.B. Zylinder oder rotativer Antrieb). Das Verfahren trägt in vorteilhafter Weise dazu bei, dass Energie in Form von kinetischer Energie im System gespeichert und diese dann vorteilhaft für den Druckaufbau genutzt werden kann. Ein Vorteil ist, dass eine Antriebsquelle des Systems, wie etwa ein Elektro-Motor kleiner dimensioniert werden kann. Da der Elektromotor üblicherweise einen Großteil des Gewichtes und des Volumens ausmacht, lässt sich dadurch das gesamte System vorteilhaft leichter und kleiner dimensionieren. Der Grund ist, dass mittels des Verfahrens über einen längeren Zeitraum Energie in das System gebracht werden kann, sodass die Spitzenlast vorteilhaft reduziert werden kann. Hohe Spitzenlasten verursachen zudem in der Regel hohe Stromkosten aufgrund zusätzlicher Netzanschlussleistung. Somit kann das Verfahren vorteilhaft zu niedrigeren Stromkosten beitragen.

Das Speichern gemäß Schritt b) kann insbesondere zumindest teilweise und/oder zumindest zeitweise in kinetischer Form erfolgen. Dies kann mit anderen Worten auch so beschrieben werden, dass die erzeugte kinetische Energie zumindest teilweise und/oder zumindest zeitweise als kinetische Energie in dem System gespeichert werden kann, beispielsweise in dem eine Förderung in einem (unten näher beschriebenen) drucklosen Umlauf erfolgt. Dies kann zum Beispiel an einem Beginn des Verfahrens bzw. in einem ersten Zeitraum erfolgen. Alternativ oder kumulativ kann die erzeugte kinetische Energie gemäß Schritt b) auch in Form eines Drucks und/oder in Form von mechanischer Energie gespeichert werden. Insbesondere kann die Energie in Form eines Druck in einem Steller eingesperrt und dadurch gespeichert werden. Dies kann zum Beispiel an einem Ende des Verfahrens bzw. in einem zweiten Zeitraum erfolgen. Der zweite Zeitraum kann nach Beendigung des ersten Zeitraums beginnen. Gegebenenfalls kann ein zeitlicher Abstand zwischen den beiden Zeiträumen liegen.

In Schritt c) kann beispielsweise ein Halten von Hydraulikdruck in zumindest einem Teil des Systems unter Verwendung zumindest eines Teils der gespeicherten Energie erfolgen. Beispielsweise kann das Bereitstellen und/oder Halten des Hydraulikdrucks genutzt werden, um eine Werkzeug zuzustellen, insbesondere in einer betätigten Stellung zu Halten und/oder ein Werkstück damit zu spannen. Zum Beispiel kann das Bereitstellen und/oder Halten des Hydraulikdrucks genutzt werden, um eine Schweißzange in einer betätigten Stellung zu Halten.

Nach einer vorteilhaften Ausgestaltung wird vorgeschlagen, dass zur Erzeugung von kinetischer Energie gemäß Schritt a) eine Antriebsquelle des Systems eine kinetische Rotationsenergie erzeugt. Die Antriebsquelle kann beispielsweise einen Motor, wie etwa einen Elektromotor umfassen.

Nach einer weiteren vorteilhaften Ausgestaltung wird vorgeschlagen, dass zumindest ein Teil der kinetischen Energie in einem kinetischen Speicher und/oder einem mechanischen Speicher des Systems gespeichert wird. Der Speicher kann zwischen einer Antriebsquelle des Systems und einer Energiewandlungseinheit des Systems angeordnet sein. Die Energiewandlungseinheit kann beispielsweise eine Hydraulikpumpe umfassen, die Rotationsenergie in kinematische Energie und Druck des Hydraulikmediums wandeln kann. Ein Beispiel für einen mechanischen Speicher kann etwa eine Feder darstellen. Ein Beispiel für einen mechanischen und kinetischen Speicher kann etwa ein Rotationskörper darstellen. Ein besonders vorteilhafter mechanischer und kinetischer Speicher kann etwa mit einer (hierzu ggf. gezielt größer als sonst erforderlich dimensionierten) Kupplung und/oder einem Schwungrad gebildet werden.

Das System kann somit vorteilhaft mit einem Energiespeicher ausgestattet werden, aus dem Energie verwendet werden kann, um damit den Druckaufbau zu vergrößern. Insbesondere kann dies so ermöglicht werden, dass das System dadurch nicht schwerer wird und weiterhin regelbar bleibt.

Beispielsweise kann der Speicher eine mechanische Kupplung umfassen. Die Kupplung kann zur bedarfsweisen mechanischen Verbindung von Antriebsquelle und Energiewandlungseinheit angeordnet und eingerichtet sein. Zum Beispiel kann der Speicher ein Schwungrad und/oder eine Kupplung umfassen. Vorzugsweise umfasst der Speicher eine Kupplung ohne Schwungrad bzw. eine Kupplung und kein (dazu separates) Schwungrad. Die Kupplung kann, um vorteilhaft als kinetischer Speicher wirken zu können, insbesondere gezielt größer als sonst erforderlich dimensionierten, insbesondere gezielt größer dimensioniert werden, als dies für die im Betrieb von der Antriebsquelle auf die Energiewandlungseinheit zu übertragenden Drehmomente erforderlich wäre.

Nach einer weiteren vorteilhaften Ausgestaltung wird vorgeschlagen, dass zumindest ein Teil des in dem System befindlichen Hydraulikmediums in einem drucklosen Umlauf gefördert wird. Insbesondere bei vergleichsweise kurzen Zylindern oder rotativen Antrieben mit geringem Drehwinkel kann die Verwendung des drucklosen Umlaufs besonders vorteilhaft sein. Der drucklose Umlauf kann in vorteilhafter Weise dazu beitragen, dass mit dem System höhere Zielgeschwindigkeiten für die Stellgeschwindigkeit (Ausfahrgeschwindigkeit des Zylinders oder rotativen Antriebs) erreicht werden können. Beispielsweise können durch den drucklosen Umlauf in vorteilhafter Weise höhere (Fluid-)Geschwindigkeiten im hydraulischen Kreislauf erreicht werden, die zur Folge haben können (nach Umschalten in den Druckaufbau), dass eine höhere Stellgeschwindigkeit des Steller erreicht werden kann, wodurch vorteilhaft höhere Drücke in dem Steller, insbesondere im Zylinder bzw. dem rotativen Antrieb erreicht werden können (insbesondere wenn dieser mit der höheren Geschwindigkeit an einen Anschlag trifft).

Nach einer weiteren vorteilhaften Ausgestaltung wird vorgeschlagen, dass der Steller (Zylinder oder rotativer Antrieb) auf eine (vordefinierbare oder vordefinierte) Zielgeschwindigkeit beschleunigt wird. Die Zielgeschwindigkeit kann so gewählt werden, dass sie der maximalen Ausfahrgeschwindigkeit entspricht. Die Zielgeschwindigkeit kann beispielsweise einen vordefinierbaren oder vordefinierten Wert der Stellgeschwindigkeit des Stellers beschreiben.

Das Beschleunigen auf die Zielgeschwindigkeit kann sich an ein Fördern im drucklosen Umlauf anschließen bzw. anschließend erfolgen. Beispielsweise kann das Beschleunigen auf die Zielgeschwindigkeit sich unmittelbar an ein Fördern im drucklosen Umlauf anschließen. Hierzu kann ein Umschalten der Ventilkonfiguration beitragen.

An das Beschleunigen auf die Zielgeschwindigkeit kann sich ein Druckaufbau im Steller (Zylinder oder rotativer Antrieb) anschließen. Beispielsweise kann ein Druckaufbau im Steller sich unmittelbar an das Beschleunigen auf die Zielgeschwindigkeit anschließen. Der betreffende Druckaufbau kann beispielsweise erfolgen, wenn der Steller bzw. ein Element des Stellers auf einen Anschlag trifft.

Nach einer weiteren vorteilhaften Ausgestaltung wird vorgeschlagen, dass ein zuvor erhöhter Hydraulikdruck in dem Steller (Zylinder oder rotativer Antrieb) eingeschlossen wird. Hierzu kann beispielsweise mindestens ein zwischen dem Steller und einer Energiewandlungseinheit, wie etwa einer hydraulischen Pumpe des Systems angeordnetes Ventil geschlossen werden. Vorzugsweise wird dabei ein Ventil geschlossen, welches mit einer oberhalb eines Stellelements des Stellers (zum Beispiel Kolbens des Zylinders) angeordneten Kammer des Stellers (zum Beispiel Zylinderkammer) verbunden und zur Verbindung dieser Kammer mit dem hydraulischen Kreislauf vorgesehen, angeordnet und eingerichtet ist.

Beispielsweise kann sich das Einschließen des Hydraulikdrucks in dem Steller (Zylinder oder rotativer Antrieb) an einen Druckaufbau im Steller anschließen. Zum Beispiel kann sich das Einschließen des Hydraulikdrucks in dem Steller unmittelbar an einen Druckaufbau im Steller anschließen.

Nach einem weiteren Aspekt wird ein hydraulisches System angegeben, eingerichtet zur Durchführung eines hier beschriebenen Verfahrens, aufweisend:
- mindestens einen hydraulisch betätigbaren Steller (Zylinder oder rotativer Antrieb),
- mindestens eine Antriebsquelle für Bewegungsenergie,
- mindestens eine Energiewandlungseinheit zur Umwandlung der Bewegungsenergie von der Antriebsquelle in hydraulische Bewegungsenergie und hydraulischen Druck,
- mindestens einen hydraulischen Kreislauf mit Ventilen zur Steuerung des Hydraulikmediums.

Bei der Antriebsquelle für Bewegungsenergie kann es sich zum Beispiel um einen Elektromotor handeln. Bei der Energiewandlungseinheit (Umwandlungseinheit), die die Bewegungsenergie in hydraulische Bewegungsenergie und hydraulischen Druck umwandeln kann, kann es sich zum Beispiel um eine hydraulische Pumpe handeln.

Das System kann weiterhin eine Reihe von hydraulischen Ventilen, zur Steuerung des hydraulischen Mediums und der darin gespeicherten Energie umfassen. Bei dem Steller kann es sich vorzugsweise um einen Zylinder handeln. Bei dem Zylinder kann es sich um einen Differentialzylinder handeln. Am Ende des Stellers bzw. Zylinders kann eine Kraft erzeugt werden.

Weiterhin kann das hydraulische System mindestens einen kinetische und/oder mechanischen Speicher zur Speicherung von kinetischer Energie in dem System aufweisen. Der kinetische Speicher kann zum Beispiel eine mechanische Kupplung zwischen Elektromotor und hydraulischer Pumpe umfassen.

Die im Zusammenhang mit dem Verfahren erörterten Details, Merkmale und vorteilhaften Ausgestaltungen können entsprechend auch bei dem hier vorgestellten System auftreten und umgekehrt. Insoweit wird auf die dortigen Ausführungen zur näheren Charakterisierung der Merkmale vollumfänglich Bezug genommen.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den

Figuren erläuterten Sachverhalte zu extrahieren und mit anderen Bestandteilen und/oder Erkenntnissen aus anderen Figuren und/oder der vorliegenden Beschreibung zu kombinieren. Es zeigen schematisch:
- Fig. 1:: einen beispielhaften Ablauf des hier vorgestellten Verfahrens,
- Fig. 2:: ein Beispiel für ein hier beschriebenes System in der Konfiguration "Eilgang ausfahren",
- Fig. 3:: ein Beispiel für ein hier beschriebenes System in der Konfiguration "Schleichgang ausfahren",
- Fig. 4:: ein Beispiel für ein hier beschriebenes System in der Konfiguration "Druckaufbau",
- Fig. 5:: ein Beispiel für ein hier beschriebenes System in der Konfiguration "Einfahren",
- Fig. 6:: ein Beispiel für ein hier beschriebenes System in der Konfiguration "Druckloser Umlauf",
- Fig. 7:: Parameterverläufe zur Veranschaulichung des Verfahrens, und
- Fig. 8:: Detailansichten aus Fig. 7.

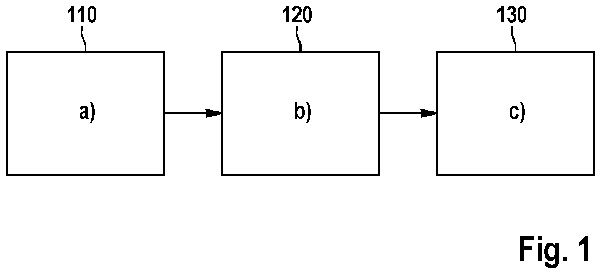

Fig. 1 zeigt schematisch einen beispielhaften Ablauf des hier vorgestellten Verfahrens zum Betreiben eines hydraulischen Systems 1 mit mindestens einem hydraulisch betätigbaren Zylinder 2. Der Zylinder stellt hier ein Beispiel für einen hydraulisch betätigbaren Steller 2 dar. Alternativ zu dem Zylinder 2 könnte beispielsweise ein rotativer Antrieb als Steller verwendet werden. Die mit den Blöcken 110, 120 und 130 dargestellte Reihenfolge der Schritte a), b), c) und d) ist beispielhaft und kann zur Durchführung des Verfahrens beispielsweise zumindest einmal in der dargestellten Reihenfolge durchlaufen werden.

In Block 110 erfolgt gemäß Schritt a) ein Erzeugen von kinetischer Energie in zumindest einem Teil des Systems 1. In Block 120 erfolgt gemäß Schritt b) ein Speichern zumindest eines Teils der erzeugten kinetischen Energie in zumindest einem Teil des Systems 1. In Block 130 erfolgt gemäß Schritt c) ein Bereitstellen von Hydraulikdruck in zumindest einem Teil des Systems 1 unter Verwendung zumindest eines Teils der gespeicherten Energie.

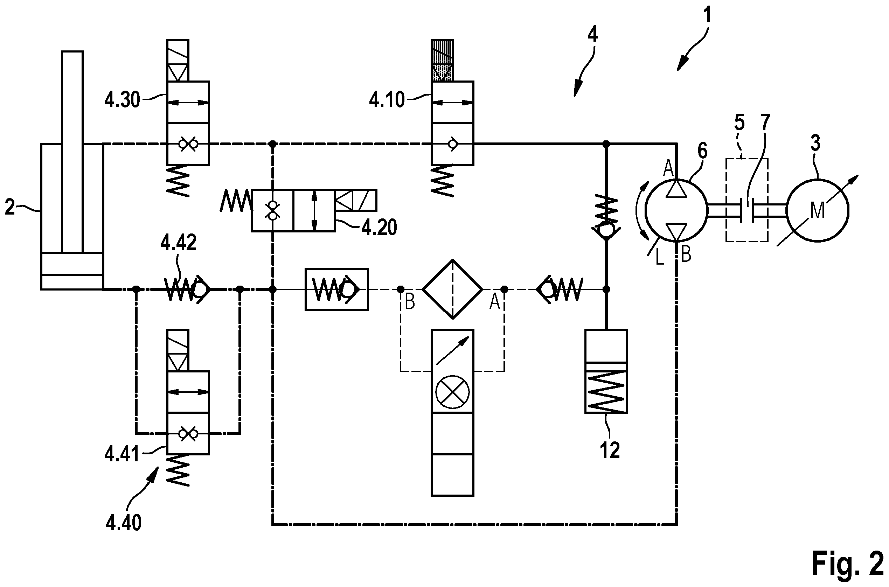

Die Figuren 2 bis 6 zeigen ein Beispiel für ein hier beschriebenes System 1, jeweils in verschiedenen Ventilkonfigurationen. Die verschiedenen Konfigurationen sind in nachfolgender Tabelle zusammengefasst:

| Figur | Bewegung | Ventilkonfiguration | | | |
|---|---|---|---|---|---|
| | | 4.10 | 4.20 | 4.30 | 4.40 |
| 2 | Eilgang ausfahren | zu | auf | auf | auf |
| 3 | Schleichgang ausfahren | auf | zu | auf | auf |
| 4 | Druckaufbau | auf | zu | auf | zu |
| 5 | Einfahren | auf | zu | auf | auf |
| 6 | Druckloser Umlauf | auf | auf | zu | zu |

Das hydraulische System 1 ist zur Durchführung eines hier beschriebenen Verfahrens eingerichtet. Das System 1 umfasst mindestens einen hydraulisch betätigbaren Zylinder 2, mindestens eine Antriebsquelle 3 für Bewegungsenergie, mindestens eine Energiewandlungseinheit 6 zur Umwandlung der Bewegungsenergie von der Antriebsquelle 3 in hydraulische Bewegungsenergie und hydraulischen Druck sowie mindestens einen hydraulischen Kreislauf 4 mit Ventilen 4.10, 4.20, 4.30, 4.40 zur Steuerung des Hydraulikmediums.

Bei dem Zylinder 2 kann es sich beispielsweise um einen Differentialzylinder handeln. Zum Betrieb eines entsprechenden Zylinders 2 ist in dem hydraulischen Kreislauf 4 vorteilhafterweise ein Reservoir 12 zur Versorgung des Kreislaufs 4 mit Hydraulikmedium vorgesehen. Das Reservoir 12 kann beispielsweise in der Art eines Ausgleichsbehälters gebildet sein.

Ein besondere Vorteil des hier vorgestellten Verfahrens sowie des hier vorgestellten Systems 1 kann darin gesehen werden, dass damit Energie in Form von kinetischer Energie in dem System 1 gespeichert werden kann. Die gespeicherte Energie kann für den Druckaufbau genutzt werden. Dadurch kann das System 1 vorteilhaft kleiner ausgelegt werden. Insbesondere kann die Antriebsquelle 3 vorteilhaft kleiner ausgelegt werden.

Bei der Antriebsquelle 3 kann es sich beispielsweise um einen Elektromotor handeln. Die Antriebsquelle 3 kann zur Erzeugung von kinetischer Energie gemäß Schritt a) eine kinetische Rotationsenergie erzeugen.

Das System 1 kann beispielsweise weiterhin mindestens einen mechanischen und/oder kinetischen Speicher 5 zur Speicherung von kinetischer Energie in dem System 1 aufweisen. Der Speicher 5 kann zum Beispiel genutzt werden, damit zumindest ein Teil der erzeugten kinetischen Energie in dem mechanischen und/oder kinetischen Speicher 5 des Systems 1 gespeichert werden kann.

Der kinetische Speicher 5 kann vorteilhafterweise in der Form einer mechanischen Kupplung 7 zwischen Antriebsquelle 3 (zum Beispiel: E-Motor) und Energiewandungseinheit 6 gebildet sein. Bei der Energiewandungseinheit 6 kann es sich beispielsweise um eine (Hydraulik-)Pumpe, insbesondere eine Konstant-Pumpe oder Verstell-Pumpe handeln. Daneben können noch weitere Elemente und Vorrichtungen verbaut sein, die zum Schutz und zur Funktion des Systems vorteilhaft sein können.

Alternativ oder kumulativ können einzelne oder mehrere der hier beschriebenen Ventilkonfigurationen dazu beitragen, dass zumindest ein Teil der erzeugten kinetischen Energie in dem Systems 1 gespeichert werden kann.

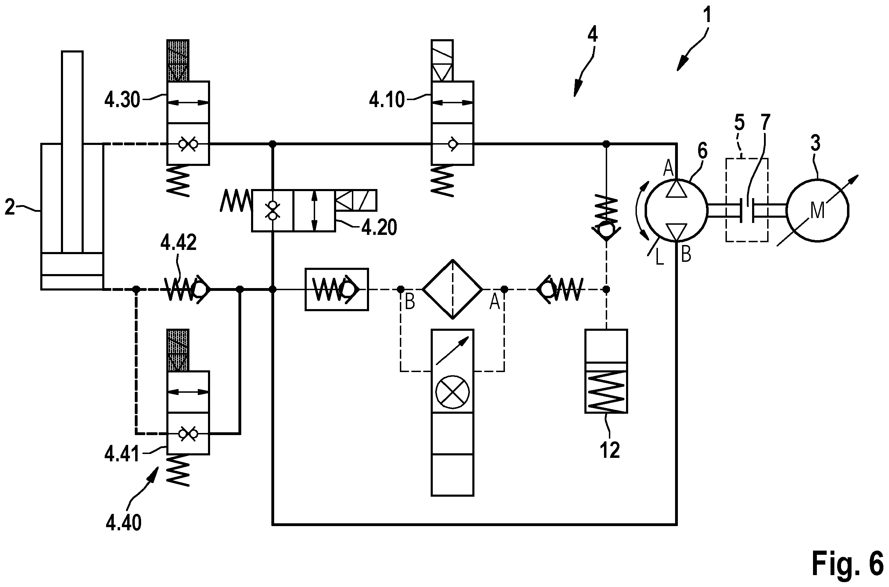

Hierzu kann beispielsweise beitragen, dass zumindest ein Teil des in dem System 1 befindlichen Hydraulikmediums in einem Drucklosen Umlauf gefördert werden kann. Dies ist beispielhaft in Fig. 6 veranschaulicht. Hierzu sind zum Beispiel die stromauf des Zylinders 2 in dem Kreislauf 4 angeordnete Ventilgruppe 4.40 sowie das stromab des Zylinders 2 angeordnete Ventil 4.3 geschlossen. Die anderen beiden Ventile 4.10, 4.20 sind geöffnet, sodass eine Bypass-Strömung am Zylinder 2 vorbei eingestellt werden kann.

Weiterhin kann ermöglicht werden, dass der Zylinder 2 vorteilhaft auf eine Zielgeschwindigkeit beschleunigt werden kann. Hierzu kann beispielsweise die Ventilkonfiguration gemäß Fig. 2 beitragen. Unmittelbar daran anschließend kann der zuvor erhöhte Hydraulikdruck in dem Zylinder 2 eingeschlossen werden. Dies kann besonders vorteilhaft dazu beitragen, dass zumindest ein Teil der erzeugten kinetischen Energie in dem System 1 gespeichert, insbesondere in dem Zylinder 2 eingeschlossen werden kann. Hierzu können beispielsweise die Ventilgruppe 4.40, insbesondere das Ventil 4.41, und das Ventil 4.3 geschlossen werden.

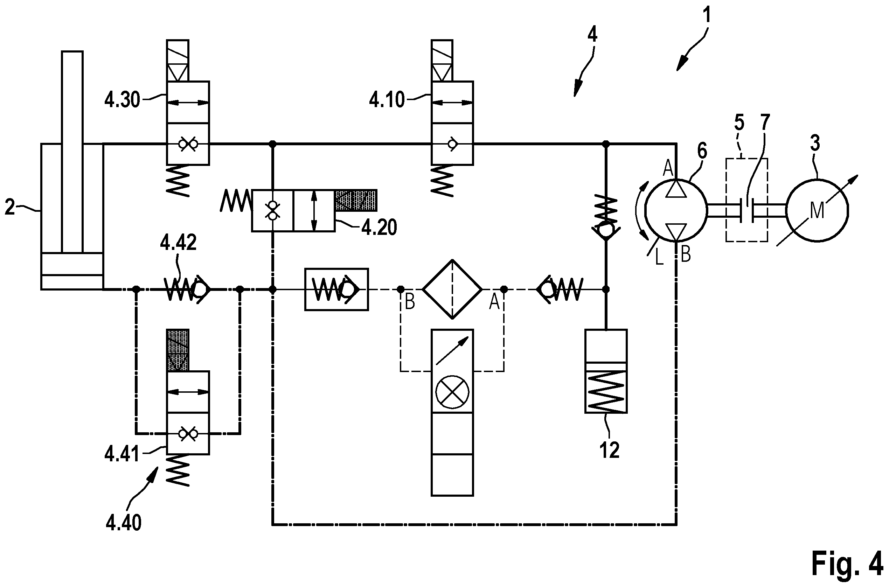

Bei den Ventilen 4.10, 4.20 und 4.30 handelt es sich vorteilhafterweise jeweils um steuerbare Ventile. Die Ventilgruppe 4.40 kann beispielhaft ein steuerbares Ventil 4.41 und ein Rückschlagventil 4.42 umfassen. Das Rückschlagventil 4.42 kann beispielsweise so angeordnet und ausgerichtet sein, dass auch bei geschlossenem Ventil 4.41 ein Druckaufbau stattfinden kann (vgl. Fig. 4). Die Ventile 4.10-4.40 können beispielhaft einzelne Ventile darstellen oder auch eine Kombination verschiedener Ventile.

In dem gezeigten Beispiel erzeugt die Antriebsquelle 3 (zum Beispiel: Elektromotor) eine kinetische Rotationsenergie. Insbesondere durch die Massen in der Antriebsquelle 2, der Kupplung 7 und der Energiewandlungseinheit 6 (zum Beispiel einer hydraulischen Pumpe) wird zunächst die Energie in diesen Elementen gespeichert. Die Energiewandlungseinheit 6 bringt das Hydraulikmedium in Bewegung. Die Ventile 4.10, 4.20, 4.30, 4.40 können beispielsweise so verschaltet sein, dass dabei das Öl im drucklosen Umlauf gefördert wird (vgl. Fig. 6). Somit kann auch ein Teil der Energie in der Bewegung des Hydraulikmediums gespeichert werden. Je nach Auslegung kann diese Energie variieren. Ziel kann es hier insbesondere sein, mit möglichst kleiner Masse eine große Trägheit zu erzeugen.

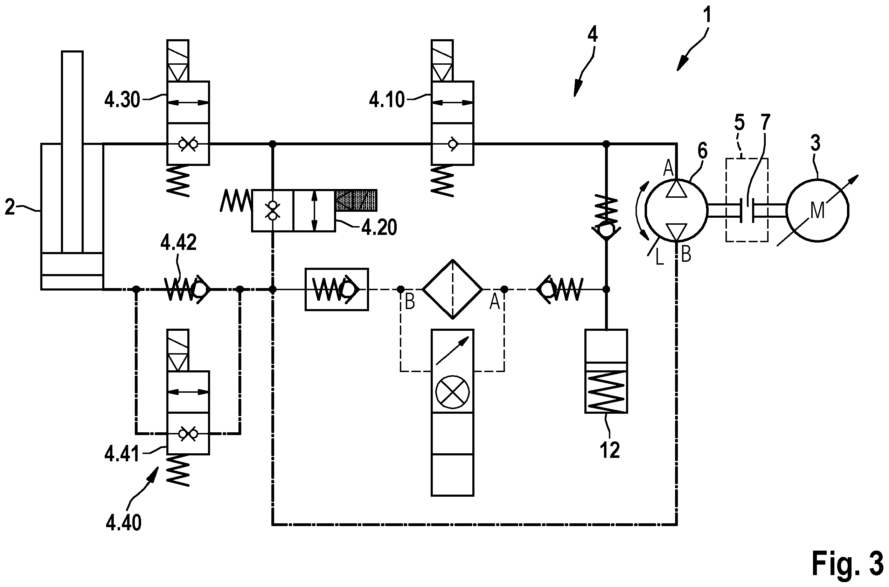

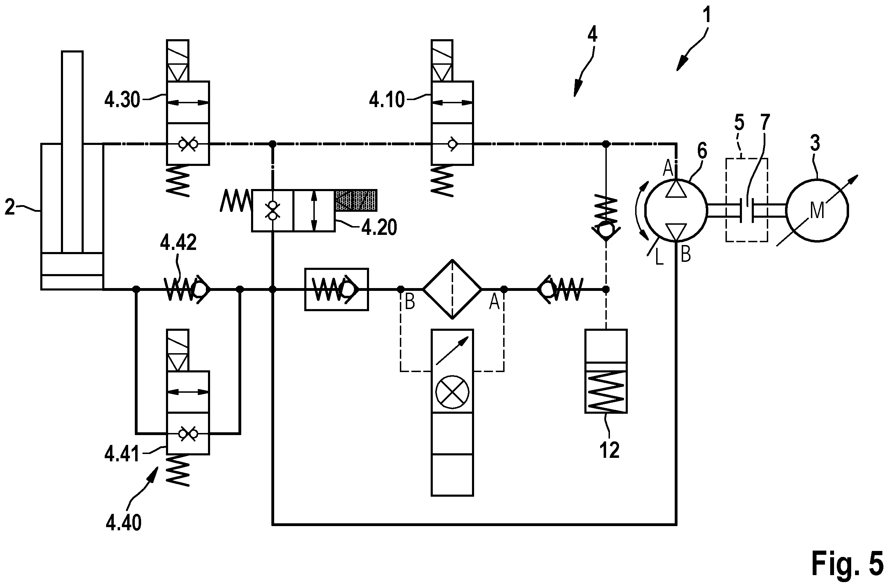

Das beschriebene System 1 kann dabei die konventionellen Verfahrarten, Eilgang ausfahren (Fig. 2), Schleichgang ausfahren (Fig. 3), Einfahren (Fig. 5) abbilden. Weiterhin ist das System 1 hier vorteilhaft dazu vorgesehen und eingerichtet auch die Verfahrarten druckloser Umlauf (Fig. 6) und Druckaufbau (Fig. 4) realisieren zu können. Die letztgenannten sind für das Speichern der kinetischen Energie im System 1 besonders vorteilhaft.

Beispielsweise kann nach dem drucklosen Umlauf in den Druckaufbau geschaltet werden und die kinetische Energie kann in Druckenergie umgewandelt werden. Insbesondere wenn der Druck in der Zylinderkammer des Zylinders 2 am höchsten wird, kann vorteilhafterweise das Ventil 4.40 bzw. 4.41 geschlossen und der Druck somit vorteilhaft eingesperrt werden.

Als eine weitere vorteilhafte Variante kann der Zylinder 2 direkt beschleunigt werden. Bevor dieser auf einen Anschlag trifft, erreicht er die Höchstgeschwindigkeit. In diesem Zustand kann vorteilhaft der Druck im Zylinder 2 eingeschlossen bzw. eingesperrt werden, um die Energie im System 1 zu speichern. Somit wird wieder die kinetische Energie in Druckenergie umgewandelt und im System 1 gespeichert.

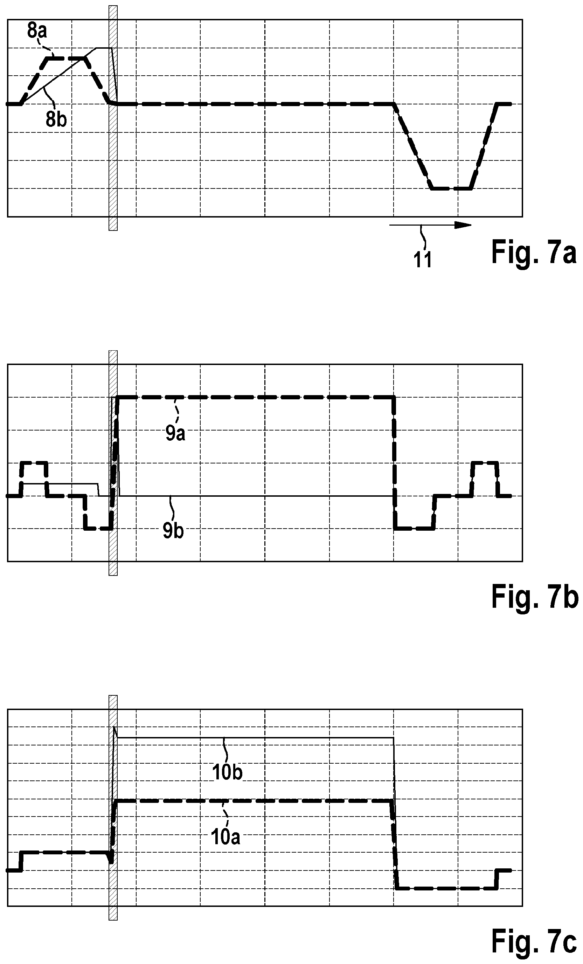

Die Figuren 7a, 7b und 7c zeigen über der Zeit 11 Parameterverläufe zur Veranschaulichung des Verfahrens. Gezeigt sind die Parameter Zylinder-Ausfahrgeschwindigkeit 8, Motor-Drehmoment 9 und Zylinderkammer-Druck 10. Die Parameter sind jeweils für ein herkömmliches System (Index a) und für das hier beschriebene System (Index b) veranschaulicht. Beide Versuchs-Systeme hatten einen gleich großen Motor.

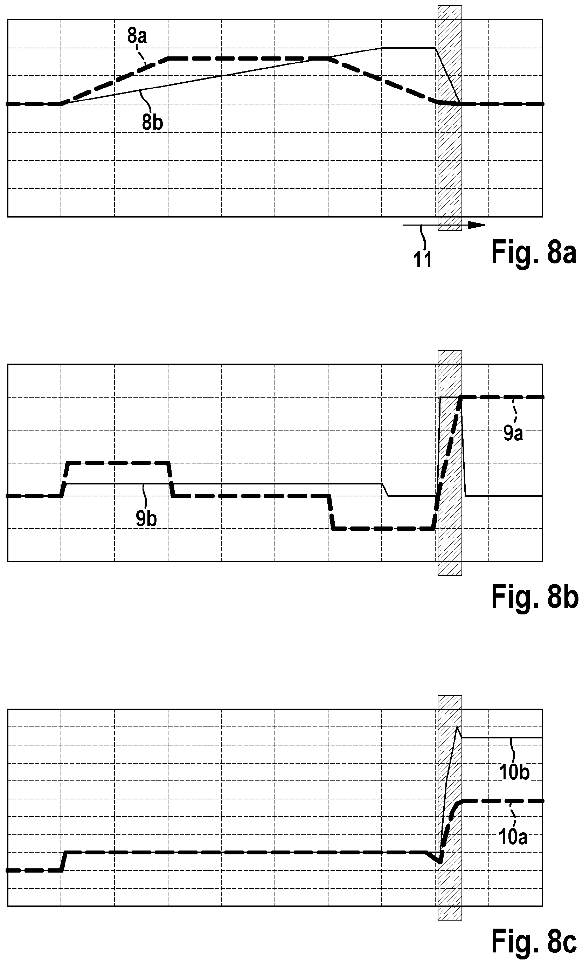

Die Diagramme gemäß den Figuren 7a, 7b und 7c zeigen jeweils einen gesamten Zyklus mit Ausfahren, Druckaufbau, Halten und Einfahren. Die Figuren 8a, 8b und 8c zeigen Detailansichten der besonders relevanten Stellen bis kurz nach dem Druckaufbau.

Es ist insbesondere zu erkennen, dass die maximale Ausfahrgeschwindigkeit 8b bei dem hier beschriebenen System 1 höher sein kann. Weiterhin kann das Halten bei dem hier beschriebenen System 1 auch bei abgesenktem Motor-Drehmoment 9b erfolgen. Mit dem hier beschriebenen System 1 kann in vorteilhafter Weise ein deutlich höherer Zylinderkammer-Druck 10 zum Halten erreicht werden.

Insbesondere kann hier somit ein geschlossenes System 1 angegeben werden, dessen Ventilkonfiguration einen drucklosen Umlauf im Kreislauf 4 ermöglichen kann, insbesondere mit anschließendem Druckaufbau und Einsperren des Drucks im Zylinder 2. Dies ist eine vorteilhafte Möglichkeit, um in dem System 1 kinetische Energie zu speichern, die beispielsweise zum Ausüben einer Haltekraft, zum Beispiel bei einer Anwendung zum Zustellen einer Schweißzange genutzt werden kann.

Weiterhin vorteilhaft kann mittels des Systems 1 der Zylinder 2 ausgefahren und auf beispielsweise Maximalgeschwindigkeit beschleunigt werden, mit anschließendem Druckaufbau und Einsperren des Peak-Druckes im Zylinder 2. Dies ist eine weitere vorteilhafte Möglichkeit, um in dem System 1 kinetische Energie zu speichern, die beispielsweise zum Ausüben einer Haltekraft, zum Beispiel bei einer Anwendung zum Zustellen einer Schweißzange genutzt werden kann.

Der eingesperrte Druck in einer Zylinderkammer des Zylinders 2 ist dabei in der Regel höher als der Druck, der rein aus dem Moment der Antriebsquelle 3 (zum Beispiel: Elektromotor) erzeugt werden kann. Dies ist besonders gut in Fig. 7c zu erkennen. Dort ist veranschaulicht, dass bei den Versuchs-Systemen mit der Nutzung der kinetischen Energie ein ca. doppelt so hoher Druck erzeugt werden konnte.

Das Verfahren trägt somit in vorteilhafter Weise dazu bei, hydraulische Systeme mit mindestens einem hydraulisch betätigbaren Zylinder kompakter bauen und/oder energieeffizienter betreiben zu können.

### Bezugszeichenliste

- 1: System
- 2: Steller
- 3: Antriebsquelle
- 4: Kreislauf
- 4.10: Ventil
- 4.20: Ventil
- 4.30: Ventil
- 4.40: Ventilgruppe
- 4.41: Ventil
- 4.42: Rückschlagventil
- 5: Speicher
- 6: Energiewandlungseinheit
- 7: Kupplung
- 8: Zylinder-Ausfahrgeschwindigkeit
- 9: Motor-Drehmoment
- 10: Zylinderkammer-Druck
- 11: Zeit
- 12: Reservoir

## Patentansprüche

1. Verfahren zum Betreiben eines hydraulischen Systems (1) mit mindestens einem hydraulisch betätigbaren Steller (2), umfassend zumindest folgende Schritte:
a) Erzeugen von kinetischer Energie in zumindest einem Teil des Systems (1),
b) Speichern zumindest eines Teils der erzeugten kinetischen Energie in zumindest einem Teil des Systems (1),
c) Bereitstellen von Hydraulikdruck in zumindest einem Teil des Systems (1) unter Verwendung zumindest eines Teils der gespeicherten Energie.

2. Verfahren nach Anspruch 1, wobei zur Erzeugung von kinetischer Energie gemäß Schritt a) eine Antriebsquelle (3) des Systems (1) eine kinetische Rotationsenergie erzeugt.

3. Verfahren nach Anspruch 1 oder 2, wobei zumindest ein Teil der kinetischen Energie in einem zumindest mechanischen oder kinetischen Speicher (5) des Systems (1) gespeichert wird.

4. Verfahren nach Anspruch 3, wobei der Speicher (5) zwischen einer Antriebsquelle (3) des Systems (1) und einer Energiewandlungseinheit (6) des Systems (1) angeordnet ist.

5. Verfahren nach Anspruch 3 oder 4, wobei der Speicher (5) eine mechanische Kupplung (7) umfasst.

6. Verfahren nach einem der vorhergehenden Ansprüche, wobei zumindest ein Teil des in dem System (1) befindlichen Hydraulikmediums in einem drucklosen Umlauf gefördert wird.

7. Verfahren nach einem der vorhergehenden Ansprüche, wobei der Steller (2) auf eine Zielgeschwindigkeit beschleunigt wird.

8. Verfahren nach einem der vorhergehenden Ansprüche, wobei ein zuvor erhöhter Hydraulikdruck in dem Steller (2) eingeschlossen wird.

9. Hydraulisches System (1), eingerichtet zur Durchführung eines Verfahrens nach einem der vorhergehenden Ansprüche, aufweisend:
- mindestens einen hydraulisch betätigbaren Steller (2),
- mindestens eine Antriebsquelle (3) für Bewegungsenergie,
- mindestens eine Energiewandlungseinheit (6) zur Umwandlung der Bewegungsenergie von der Antriebsquelle (3) in hydraulische Bewegungsenergie und hydraulischen Druck,
- mindestens einen hydraulischen Kreislauf (4) mit Ventilen (4.10, 4.20, 4.30, 4.40) zur Steuerung des Hydraulikmediums.

10. Hydraulisches System (1) nach Anspruch 9, weiterhin aufweisend mindestens einen zumindest mechanischen oder kinetischen Speicher (5) zur Speicherung von kinetischer Energie in dem System (1).
